# EUROPÄISCHE PATENTSCHRIFT

(11) **EP 0 715 692 B1**
(45) Veröffentlichungstag und Bekanntmachung des Hinweises auf die Patenterteilung: **18.03.1998**
(21) Anmeldenummer: 95924308.0
(22) Anmeldetag: 21.06.1995
(51) Int. Cl.: F04D 15/00, F16K 27/02

(54) **PUMPENSCHUTZVENTIL**
PUMP-PROTECTING VALVE
SOUPAPE DE PROTECTION DE POMPE

(30) Priorität: 29.06.1994 DE 4422749
(43) Veröffentlichungstag der Anmeldung: 12.06.1996
(73) Patentinhaber: Holter Regelarmaturen GmbH & Co. KG, D-33758 Schloss Holte-Stukenbrock (DE)
(72) Erfinder: RAMBOW, Gerd, D-51588 Nümbrecht (DE)
(74) Vertreter: Hanewinkel, Lorenz, Dipl.-Phys.
(86) Internationale Anmeldenummer: EP9502411
(87) Internationale Veröffentlichungsnummer: WO9600853

(56) Entgegenhaltungen:
- DE-A- 3 618 644
- US-A- 4 967 783

## Beschreibung

Die Erfindung betrifft ein Pumpenschutzventil mit einem Ventilgehäuse, mit einem in einer Hauptdurchgangsrichtung angeordneten Pumpenanschlußstutzen, einem diesen gegenüberliegenden Speisewasseranschlußstutzen, einem seitlich zur Hauptdurchgangsrichtung angeordneten Bypaßstutzen und einem diesem gegenüberliegenden Montageplattenverschluß zwischen denen koaxial zu dem Bypaßstutzen und dem Montageplattenverschluß ein Rückschlagventilteller, ggf. federbelastet, axial verschieblich gelagert ist, der ein zu diesem koaxiales, mindestens einstufiges Drosselventil betätigt, so daß dieses bei geschlossenem Rückschlagventilteller voll geöffnet ist und von der Pumpenanschlußseite einen Bypaß zu dem Bypaßstutzen herstellt, wobei ein Ventilsitz des Ventilgehäuses für den Rückschlagventilteller dem Montageplattenverschluß gegenüberliegt.

Aus der DE 42 30 697 A1 ist ein Pumpenschutzventil bekannt, in dem eine in der Hauptdurchgangsrichtung gelagerte Spindel mit einem Rückschlagventilteller zur Steuerung des Bypaßstromes durch ein Lochkorbdrosselventil angeordnet ist. Nachteilig an diesem bekannten Pumpenschutzventil ist jedoch, daß nur nach einem Ausbau des Ventilgehäuses aus der Rohrleitung die verschiedenen Bauteile des Ventils zugänglich sind.

Aus der DE-OS 1 906 305 ist darüber hinaus ein weiteres Ventil bekannt, bei welchem das Drosselventil durch einen koaxial mit dem Ventilteller des Hauptdurchgangsventils liegenden zweiten Ventilteller gebildet wird, wobei die beiden Ventilteller auf einer gemeinsamen, vertikal gerichteten Ventilstange befestigt sind, deren Länge zwischen den Ventiltellern größer ist als der Abstand der Durchlauföffnung von der Überlauföffnung, so daß bei geschlossener Auslaßleitung das Gewicht der beweglichen Ventilteile und die auf den Ventilteller der Überlauföffnung wirkende Druckdifferenz die Überlauföffnung öffnet und die Durchlauföffnung schließt, während bei geöffneter Auslaßöffnung und einer bestimmten Druckdifferenz zwischen der Einlaß- und Auslaßkammer die auf den Ventilteller der Durchlauföffnung wirkende Druckdifferenz die Durchlauföffnung öffnet und die Überlauföffnung schließt. Notwendigerweise liegt bei dieser Konstruktion der Ventilsitz des Drosselventils auf der dem Montageplattenverschluß abgewandten Seite. Zur Wartung des Ventils muß hierbei zumindest zunächst der Bypaßanschluß demontiert werden, um durch den Bypaßstutzen den Drosselventilteller zu entfernen. Anschließend kann dann von der Montageplattenseite aus der Hauptventilteller entnommen werden. Durch den notwendigen Abbau der Bypaßleitung wird auch hier die Wartung erschwert.

Aufgabe der vorliegenden Erfindung ist es, ein Pumpenschutzventil zu schaffen, das einfach herstellbar ist und schnellere Wartungsarbeiten ermöglicht, ohne daß zuvor am Ventil angeschlossene Rohrleitungen demontiert werden müssen.

Diese Aufgabe wird dadurch gelöst, daß der Rückschlagventilteller und das Drosselventil durch den Montageplattenverschluß aus dem Ventilgehäuse herausnehmbar gelagert sind.

Die mit der Erfindung erzielten Vorteile bestehen insbesondere darin, daß durch Abnehmen des Montageplattenverschlusses ein einfacher Zugang zu allen Verschlußteilen des Ventils ermöglicht wird. Dies führt zu einer leichten Austauschbarkeit der Ventilteile.

Entgegen einem technischen Vorurteil werden die Strömungseigenschaften in Hauptflußrichtung durch die Umlenkung im Bereich des Ventils nicht wesentlich verschlechtert. Es entstehen nicht mehr Reibungsverluste als bei herkömmlichen Ventilen, deren Rückschlagventile in der Hauptstromrichtung angeordnet sind.

Die Unteransprüche enthalten verschiedene vorteilhafte Ausführungsformen und Weiterbildungen des erfindungsgemäßen Ventils.

Bevorzugte Ausführungsbeispiele der Erfindung werden nachfolgend anhand der Zeichnungen näher beschrieben. Es zeigen:
- Fig. 1: einen Querschnitt durch ein Pumpenschutzventil nach einem ersten Ausführungsbeispiel;
- Fig. 2: einen Querschnitt durch ein Pumpenschutzventil nach einem zweiten Ausführungsbeispiel;
- Fig. 3: einen Querschnitt durch ein Pumpenschutzventil nach dem ersten Ausführungsbeispiel aus Fig. 1 mit einem zusätzlichen Rückschlagventil in der Bypaßleitung und einem zusätzlichen Anschluß für eine Handanfahrleitung;
- Fig. 4: einen Querschnitt durch ein Pumpenschutzventil nach einem dritten Ausführungsbeispiel;
- Fig. 5: einen Querschnitt durch eine Drosselventilspindel aus einem Pumpenschutzventil nach dem dritten Ausführungsbeispiel aus Fig. 4;

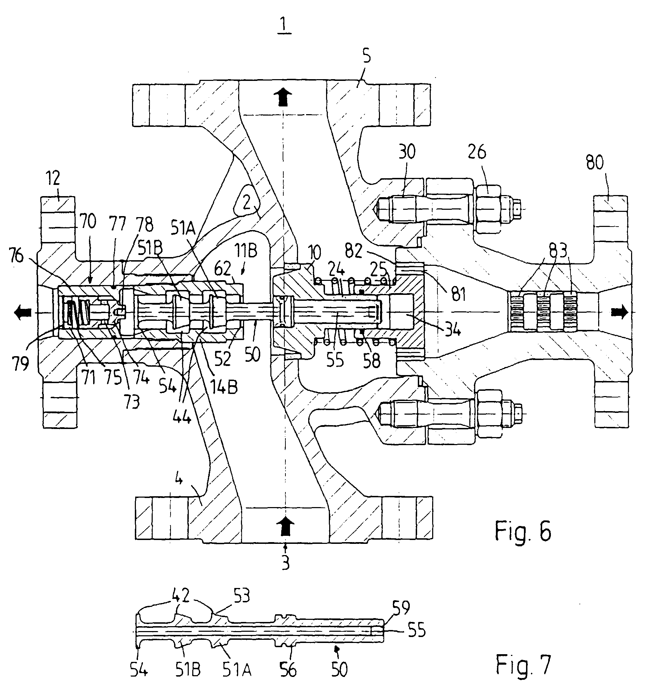

- Fig. 6: einen Querschnitt durch ein Pumpenschutzventil nach dem dritten Ausführungsbeispiel aus Fig. 4 mit einem zusätzlichen Rückschlagventil in der Bypaßleitung und einem zusätzlichen Anschluß für eine Handanfahrleitung;
- Fig. 7: einen Querschnitt durch eine Drosselventilspindel aus einem Pumpenschutzventil nach dem dritten Ausführungsbeispiel mit zusätzlichem Rückschlagventil in Fig. 6;
- Fig. 8: einen Querschnitt durch ein Pumpenschutzventil nach dem dritten Ausführungsbeispiel wie in Fig. 4, hier jedoch mit einem aus Vollmaterial gedrehten Pumpengehäuse.

Das Pumpenschutzventil (1) besteht aus einem Ventilgehäuse (2, 2D), welches Durchtrittsstutzen (4, 5, 12, 80) für ein flüssiges Medium aufweist. In einer Hauptdurchgangsrichtung (3) wird das flüssige Medium durch einen Pumpenanschlußstutzen (4) des Ventilgehäuses (2, 2D) hindurch in einen sich anschließenden, auf der gegenüberliegenden Seite des Gehäuses (2, 2D) angeordneten Speisewasseranschlußstutzen (5) geleitet.

Das Ventilgehäuse (2, 2D) weist eine im wesentlichen parallel zur Hauptdurchgangsrichtung (3) verlaufende Mittelwand (23) auf, welche den Innenraum des Gehäuses (2, 2D) in einen speisewasseranschlußseitigen und einen pumpenanschlußseitigen Raum unterteilt. In dieser Mittelwand befindet sich eine quer zur Hauptdurchgangsrichtung liegende Durchgangsöffnung für den Hauptstrom. Auf der Speisewasseranschlußseite weist diese Durchgangsöffnung einen Ventilsitzring (22) auf und wird durch einen unter Federspannung gegen die Öffnung gedrückten Rückschlagventilteller (10) verschlossen.

Die Wände des Pumpenanschlußstutzens (4) einerseits und des Speisewasseranschlußstutzens (5) andererseits sind so geformt, daß das fließende Medium bei einer Richtungsänderung von mindestens 90 Grad möglichst wenig Reibungsverluste erfährt. Zu diesem Zweck erstreckt sich eine zylinderförmige Wandung (6) des Pumpenanschlußstutzens (4) in einem spitzen Winkel zur Hauptdurchgangsrichtung (3). In einem weiteren Verlauf des Pumpenanschlußstutzens (4) geht die Wandung desselben in eine schalenförmige Wandung (7) über, die das Medium quer zur Hauptdurchgangsrichtung (3) ablenkt und in den Bereich des Speisewasseranschlußstutzens (5) weiterleitet. Der Speisewasseranschlußstutzen (5) weist in dem Anschlußbereich zum Pumpenanschlußstutzen (4) eine schalenförmige Wandung (8) auf, an der das flüssige Medium richtungsmäßig der senkrechten Hauptdurchgangsrichtung (3) angenähert wird.

Abstromseitig angeordnete schräge Wandungen (9) sorgen dafür, daß die Auslaßöffnung des Speisewasseranschlußstutzens (5) koaxial zur Einlaßöffnung des Pumpenanschlußstutzens (4) angeordnet ist.

Sobald abstromseitig des Speisewasseranschlußstutzens (5) die Durchflußmenge unterbrochen wird, schließt sich der quer zur Hauptdurchgangsrichtung (3) angeordnete Rückschlagventilteller (10). Im Zusammenwirken mit einem koaxial zu diesem angeordneten Drosselventil (11, 11A, 11B) wird das flüssige Medium in einen quer zur Hauptdurchgangsrichtung (3) koaxial mit dem Ventilteller (10) liegenden Bypaßstutzen (12, 12D) abgeleitet.

Gegenüberliegend zum Bypaßstutzen (12, 12D) ist das Gehäuse (2, 2D) durch einen koaxial zum Ventilteller (10) angeordneten Montageplattenverschluß (20) verschlossen, welcher durch Schraubverbindung (26) mit dem Ventilgehäuse (2, 2D) verbunden ist, die in Sacklöcher (30) im Gehäuse (2, 2D) eingedreht sind.

In den Figuren sind im wesentlichen drei verschiedene Ausführungsformen dargestellt, von denen zwei vornehmlich zum Einsatz in Systeme mit niedrigen Drücken dienen und eine als Hochdruckversion ausgeführt ist.

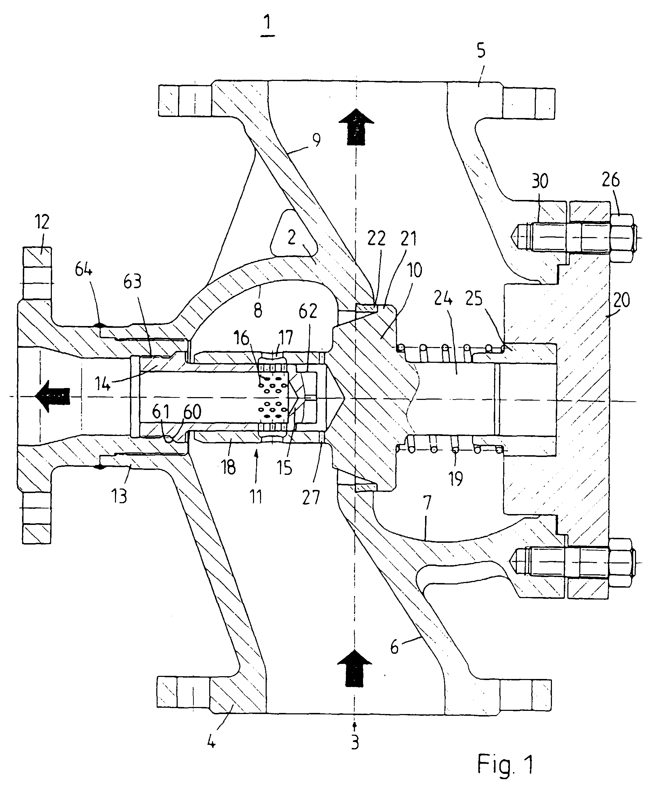

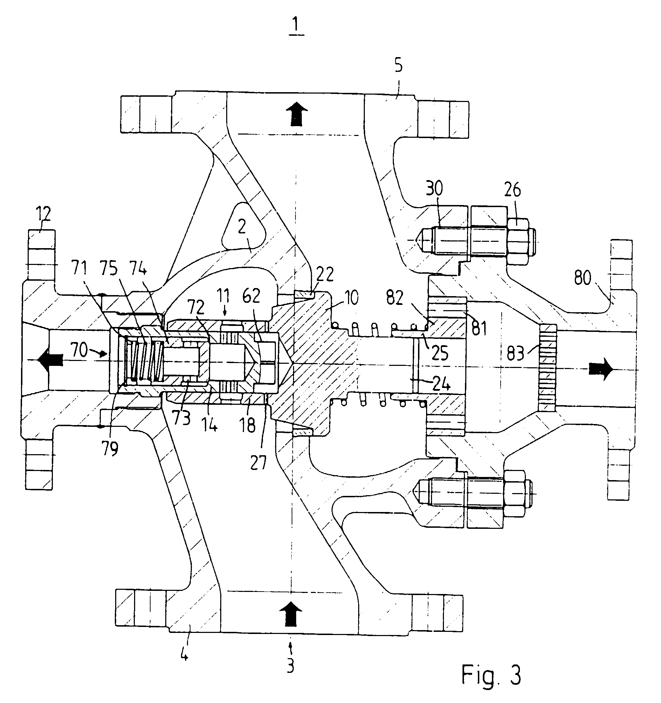

In einem ersten Ausführungsbeispiel gemäß Fig. 1 und Fig. 3 ist das Drosselventil als Lochkorbdrosselventil (11) ausgeführt. Dieses Lochkorbdrosselventil (11) besteht aus einer am Rückschlagventilteller (10) angeordneten Hülse (18), welche über einer im Ventilgehäuse (2, 2D) angeordneten, den Zufluß zum Bypaßstutzen (12) bildenden Regelbuchse (14) geführt wird.

Diese Regelbuchse (14) ist vom Gehäuseinneren aus koaxial zum Bypaßstutzen (12) in den Bypaßstutzen (12) eingeschraubt. Am Ende des Gewindes (63) der Regelbuchse (14) ist an der Mantelfläche der Regelbuchse (14) eine ringförmige Dichtfläche (60) angeformt, welche im eingeschraubten Zustand gegen einen Dichtsitz (61) im Bypaßstutzen (12) drückt und die Regelbuchse (14) gegen den Bypaßstutzen (12) abdichtet.

Die zum Bypaßstutzen (12) hin gerichtete Stirnseite der Regelbuchse (14) weist eine Durchgangsöffnung auf. Die gegenüberliegende Stirnseite der Regelbuchse (14) ist als geschlossene Stirnwand (15) ausgebildet.

Die Mantelfläche der Regelbuchse (14) weist eine Mehrzahl von Öffnungen (16) auf. Diese Öffnungen (16) korrespondieren in einer Querabflußstellung des Pumpenschutzventils (1) zu Durchgangsbohrungen (17) in der Hülse (18) am Rückschlagventilteller (10). Sobald der Hauptstrom abstromseitig unterbrochen worden ist, schiebt sich der mit einer Feder (19) vorgespannte Rückschlagventilteller (10) mit seiner Hülse (18) vollständig auf die Regelbuchse (14) des Lochkorbdrosselventils (11). Das außenseitig durch den Montageplattenverschluß (20) gehaltene Rückschlagventil (10) stößt gleichzeitig mit seinem Rand (21) gegen einen armierten Ventilsitzring (22) des Ventilgehäuses (2). In dieser Lage verschließt der Rückschlagventilteller (10) mit seinem Kolben vollständig die in einer Mittelwand (23) des Ventilgehäuses (2) gebildete Durchgangsöffnung. Der Durchfluß in Richtung des Speisewasseranschlußstutzens (5) ist hierdurch vollständig unterbrochen.

Statt dessen wird das flüssige Medium durch die Durchgangsbohrungen (17) der Hülse (18) und durch die Öffnungen (16) der Regelbuchse (14) innerhalb der Regelbuchse (14) geleitet, durch deren eine Stirnwand es das Ventilgehäuse (2) in Querrichtung verläßt.

Die Öffnungen (16) erstrecken sich radial im Mantelbereich der Regelbuchse (14). Je Öffnung (16) sind mehrere Durchgangsbohrungen (17) der Hülse (18) zugeordnet, die sich während des Schließvorgangs nach und nach über die jeweilige Öffnung (16) schieben. Durch die geeignete Anzahl, Anordnung und Größe der korrespondierenden Durchgangsöffnungen (16, 17) ist der Strom zum Bypaßstutzen (12) in den Teilschließstellungen des Rückschlagventiltellers (10) jeweils so gesteuert, daß eine vorgegebene stetige (modulierte) Regelung des Mindestmengendurchflusses gewährleistet ist. Die Mindestmenge ist die Durchflußmenge an Medium, die die vorgeschaltete (zu schützende) Pumpe benötigt, um nicht thermisch überlastet zu werden.

Bei der Verwendung als Pumpenschutzventil für Kreiselpumpen wird vorzugsweise nur der halbe Hub des Ventils genutzt, d. h. der Bypaß ist geschlossen, sobald das Hauptdurchgangsventil halb geöffnet ist. Soll das Ventil (1) als Überstromventil für eine Verdrängerpumpe genutzt werden, so kann auf einfache Weise durch Verbreitern des gelochten Bereichs in der Regelbuchse (14) und/oder in der Hülse (18) auch der ganze Hub genutzt werden.

Wegen des einfachen Ausbaus der Ventilteile lassen sich die Bohrungen (16, 17) durch Nacharbeitung leicht speziellen Betriebsbedingungen vor Ort anpassen.

Ist die Unterbrechung des Stromflusses abstromseitig des Speisewasseranschlußstutzens (5) aufgehoben, wird der Rückschlagventilteller (10) gegen die Federkraft in eine Öffnungsstellung verbracht, wobei die Durchgangsöffnung der Mittelwand (23) freiliegt und das flüssige Medium nur in Hauptstromrichtung fließt.

Damit auf den Rückschlagventilteller (10) von der Pumpenanschlußseite bzw. der Drosselventilseite her ein definierter Druck ausgeübt wird und so eine definierte Kräftebilanz im Ventil (1) gewährleistet ist, weist die Hülse (18) Entlastungsbohrungen (27) auf, die den Raum zwischen der geschlossenen Stirnwand (15) der Regelbuchse (14) und dem Rückschlagventilteller (10) mit dem Pumpenanschlußstutzen (4) verbinden.

Der quer gerichtete Rückschlagventilteller (10) wird koaxial zum Bypaßstutzen (12, 12D) durch die auf der Regelbuchse (14) des Lochkorbdrosselventils (11) geführte Hülse (18) axial verschieblich im Gehäuse (2, 2D) gehalten. Montageplattenseitig weist der Ventilteller (10) einen Führungsstutzen (24) auf, der in loser Passung mit einer Buchse (25) des Montageplattenverschlusses (20) verbunden ist.

Durch Lösen der Schraubverbindung (26) läßt sich zusammen mit dem Montageplattenverschluß (20) der Rückschlagventilteller (10) mitsamt der Hülse (18) des Drosselventils (11) einfach herausnehmen.

Um nach entnommenem Ventilteller (10) auch die Regelbuchse (14) des Drosselventils (11) einfach entnehmen zu können, ist die äußere Mantelfläche (62) der Regelbuchse (14) an dem zum Montageplattenverschluß (20) weisenden Ende als Außensechskant zur Aufnahme eines entsprechenden handelsüblichen Werkzeugs, z. B. eines Hohlsteckschlüssels, ausgeführt. Mit Hilfe dieses Werkzeugs kann dann durch den Montageplattenverschluß (20) die Regelbuchse (14) aus dem Bypaßstutzen (12, 12D) ausgeschraubt werden.

Statt mit einem Außensechskant kann die Regelbuchse (14) selbstverständlich auch mit einer anderen Werkzeugaufnahme, wie z. B. Innensechskant, Torx oder einem Schlitz zum Eingreifen eines Schraubendrehers versehen sein.

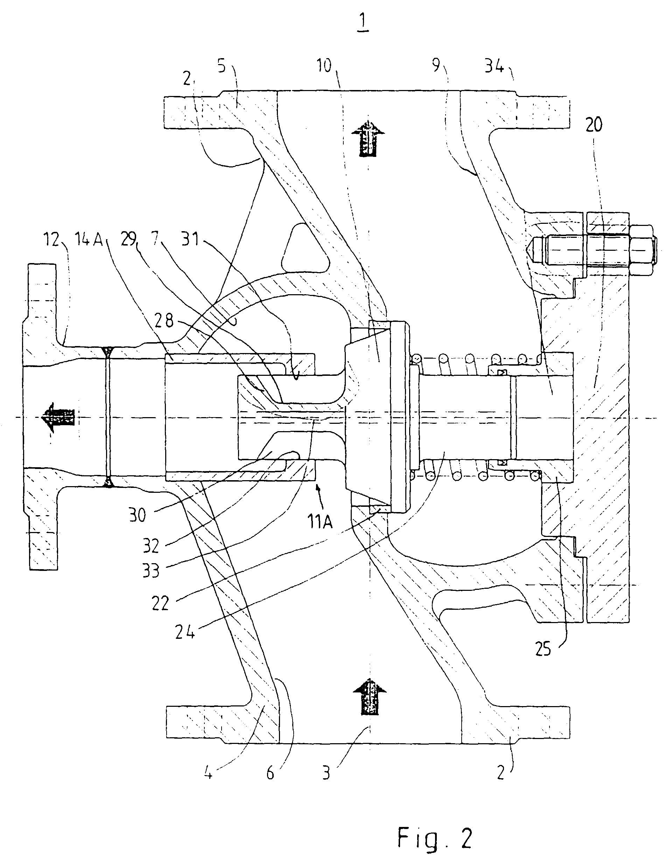

Nach einem zweiten Ausführungsbeispiel gemäß Fig. 2 ist das Drosselventil (11A) als einstufiges Kegelventil ausgebildet. Die im folgenden mit dem ersten Ausführungsbeispiel übereinstimmenden Teile sind mit den gleichen Bezugsziffern versehen.

Das Kegelventil besteht aus einem Ventilkegel (28), der über einen mittleren Schaft (29) und radial vom Schaft (29) nach außen erstreckende Stege (30) mit dem Rückschlagventilteller (10) verbunden und koaxial zu diesem angeordnet ist. Der Ventilkegel (28) ist in einer Regelbuchse (14A) axial verschieblich gelagert. Die Regelbuchse (14A) weist einen Abschnitt (31) auf, an dessen Innenseite (32) der Ventilkegel (28) bei geschlossenem Bypaßventil vollflächig anliegt. Der Ventilkegel (28) ist in Gleitpassung in der Regelbuchse (14A) geführt. Wird der Rückschlagventilteller (10) in Schließstellung bewegt, gleitet der Ventilkegel (28) und anschließend die Stege (30) auf der Innenseite (32) des Abschnitts (31), bis der Rückschlagventilteller (10) gegen den Ventilsitzring (22) stößt.

Zur Druckentlastung ist eine durch das Kegelventil, dem Rückschlagventilteller (10) und dem Führungsstutzen (24) sich axial erstreckende Druckentlastungsbohrung (33) vorgesehen. Diese verbindet einen Innenraum (34) des Führungsstutzens (24) mit einem bypaßseitig vom Ventilkegel (28) liegenden Innenraum der Regelbuchse (14A). Der Rückschlagventilteller (10) ist mit seinem Führungsstutzen (24) abdichtend in der Buchse (25) der Montageplatte (20) geführt, so daß das durch die Druckentlastungsbohrung (33) geleitete flüssige Medium nicht in Hauptstromrichtung zum Speisewasseranschlußstutzen (5) abfließen kann.

Da bei diesem Ausführungsbeispiel die Regelbuchse (14A) nahezu keinem Verschleiß unterliegt und auch nicht verstopfen kann, kann die Regelbuchse (14A) hierbei im Prinzip auch fest mit dem Gehäuse, z. B. durch Einschrumpfen, verbunden sein.

Bei den bisher dargestellten Ausführungsbeispielen des erfindungsgemäßen Pumpenschutzventils schließt das Drosselventil (11, 11A) nicht 100%ig ab, es bleibt immer ein gewisser Leckstrom, welcher in den Bypaßstutzen abfließt. Diese Ausführungsbeispiele sind daher nur zum Einsatz in Niederdruckbereiche geeignet.

Beim Einsatz im Hochdruckbereich muß dagegen der Bypaß absolut dicht sein, eine Leckage über dem Bypaß darf nicht zugelassen werden, da ansonsten das Drosselventil durch Errosions- und Kavitationsschäden innerhalb von wenigen Stunden zerstört würde.

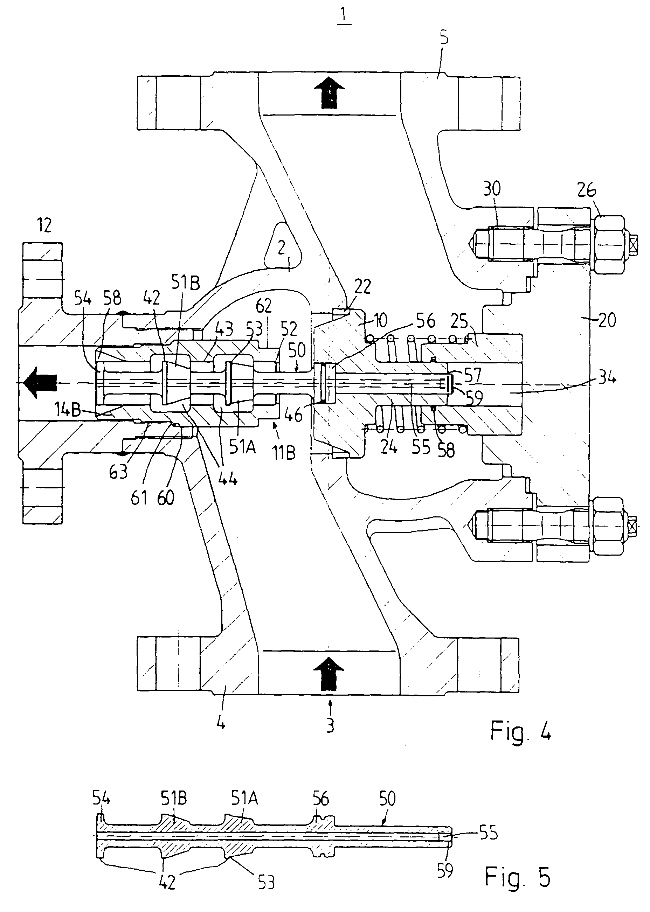

Eine entsprechende Hochdruckausführung ist in Fig. 4 dargestellt. Das Drosselventil (11B) ist hierbei ein dreistufiges Ventil mit einer am Ventilteller (10) angeordneten Regelspindel (50) mit koaxial zum Ventilteller (10) hintereinander liegenden Ventilkegeln (51A, 51B) und einem Ventilteller (54). Die Regelspindel (50) ist axial verschieblich in einer Regelbuchse (14B) geführt. In der Öffnungsstellung des Rückschlagventiltellers (10) drückt der montageplattenseitig vorderste Ventilkegel (51A) mit seinem entsprechend geformten äußersten hinteren Rand (53) gegen einen vorne innen in der Regelbuchse (14B) angeordneten, in Richtung Bypaßstutzen weisenden Dichtsitz (52). Die Ventilkegel (51A, 51B) und der hintenliegende Ventilteller (54) liegen mit ihren zylindrischen Gleitflächen (42) an zylindrischen Wandungsbereichen (43) der Regelbuchse (14B).

Wird der Rückschlagventilteller (10) in Schließstellung bewegt, bewegen sich die Gleitflächen (42) an den Ventilkegeln (51A, 51B) bzw. dem Ventilteller (54) an den zylindrischen Wandungsbereichen (43) der Regelbuchse entlang in Richtung Bypaßstutzen bis die Ventilkegel (51A, 51B) in Erweiterungen (44) der Regelbuchse (14B) gelangen, so daß das flüssige Medium bypaßseitig abfließen kann. Die Regelspindel (50) wird dann nur noch über den Ventilteller (54) an in der Innenwandung der Regelbuchse (14B) im hinteren, bypaßstutzenseitigen Bereich liegenden Stegen (58) geführt. Die Wandungsbereiche zwischen den Stegen (58) sind nach hinten konisch erweiternd ausgenommen, um auch hier eine kontinuierliche Veränderung der Durchflußöffnung bei Verstellen der Regelspindel (50) zu gewährleisten.

Die Regelspindel (50) ist mit dem Rückschlagventilteller (10) form- und kraftschlüssig verbunden. Hierzu ist der Rückschlagventilteller mit seinem Führungsstutzen (24) der Länge nach zentrisch durchbohrt. In diese Bohrung ist der montageflanschseitige Teil der Regelspindel (50) von der Bypaßstutzenseite aus hineingeschoben und schlägt mit einem in den Rückschlagventilteller (10) greifenden Verstärkungsring (56) der Regelspindel (50) am Ventilteller (10) an. Zur abdichtenden Verbindung mit dem Rückschlagventilteller (10) ist dieser Verstärkungsring (56) von einer Dichtung (46) umfaßt. Über einen Federring (57), welcher um das montageplattenseitige Ende der Regelspindel (50) greift und gegen den Führungsstutzen (24) des Rückschlagventiltellers (10) drückt wird die Regelspindel (50) am Rückschlagventilteller (10) festgeklemmt.

Der Rückschlagventilteller (10) ist mit seinem Führungsstutzen (24) in gleicher Weise in der Buchse (25) der Montageplatte (20) geführt, wie in den vorherigen Ausführungsbeispielen.

Zur Druckentlastung ist eine Druckentlastungsbohrung (55) vorgesehen, die sich axial vom dem bypaßseitig angeordneten Ventilteller (54) durch die Regelspindel (50) bis in den Bereich des Innenraums (34) des Führungsstutzens (24) erstreckt. Zur Abdichtung ist zwischen der Buchse (25) und dem Führungsstutzen (24) eine Dichtung (58) vorgesehen.

Die Grundfläche des bypaßseitigen Ventiltellers (54) und die Grundfläche des Führungsstutzens (24) mit der eingesetzten Regelspindel (50) zum Innenraum (34) sollten vorzugsweise gleich groß sein, um den gewöhnlich unbekannten Druck im Bypaßstutzen (12, 12D) zu neutralisieren.

Am montageplattenseitigen Ende ist in der Druckentlastungsbohrung (55) in der Regelspindel (50) ein Gewinde zur Aufnahme einer Gewindestange zur leichteren Entnahme der Regelspindel (50) bei der Demontage eingedreht.

Durch die dreistufige Ausbildung des Drosselventils (11B) werden höheren Druckverhältissen, vor allem auch im geöffneten Zustand des Drosselventils (11B), Rechnung getragen. Alternativ kann das Drosselventil (11B) auch ein-, zwei- oder selbstverständlich auch mehr als dreistufig ausgebildet sein, wenn die Höhe des Druckes entsprechend geringer bzw. größer ist.

Optional kann jedes der genannten Ausführungsbeispiele mit einem zusätzlichen Bypaß-Rückschlagventil (70) im Bypaßstutzen (12, 12D) versehen sein. Für das erste Ausführungsbeispiel ist dies in Fig. 3 gezeigt; für das dritte Ausführungsbeispiel in Fig. 4. Dieses Rückschlagventil (70) soll verhindern, daß der Bypaß (12) bei Stillegen der Anlage in Richtung Pumpengehäuse leerläuft.

Das Rückschlagventil (70) besteht im wesentlichen aus einem in einer Hülse (76) geführten, hohlen und zur Bypaßseite hin offenen Dichtkolben (74), welcher von einer Feder (75) mit dem äußeren Rand seiner montageplattenseitigen Stirnwand gegen eine in der Hülse (76) angeordnete Dichtfläche (72) gedrückt wird. Bypaßseitig drückt die Feder (75) gegen einen durch einen Federring (79) in der Hülse (76) gehaltenen Widerlagerring (71). Entsteht innerhalb der Hülse (76) vor dem Rückschlagventil (70) ein ausreichender Druck, so wird dadurch der Dichtkolben (74) des Rückschlagventils (70) in eine Erweiterung in der Innenwandung der Hülse (76) zurückgedrückt und das Medium kann an der Stirnfläche vorbei durch in der Seitenwandung des Dichtkolbens (74) angeordnete Abflußlöcher (73) durch den Dichtkolben (74) und den Widerlagerring (71) des Rückschlagventils (70) hindurch zum Bypaßstutzen (12, 12D) hin abfließen.

In der Niederdruckausführung mit dem Lochkorbdrosselventil (11) dient die Regelbuchse (14) gleichzeitig als Führungshülse (76) für das Rückschlagventil und weist eine entsprechende Dichtfläche (72) auf. Der Dichtkolben (74) ist von der Bypaßstutzenseite aus eingeschoben und wird dann über eine Feder (75) und das Bodenteil (71) mit einem Federring (79) in der Regelbuchse (14) festgeklemmt.

In der Hochdruckausführung befindet sich das Rückschlagventil in einer separaten Führungshülse (76) und ist hinter der eingeschraubten Regelbuchse (14B) in den Bypaßstutzen eingeschoben und über einen Dichtring (77) gegen diesen abgedichtet. Um das Rückschlagventil (70) ebenfalls durch den Montageplattenverschluß (20) entnehmen zu können weist der Dichtkolben (72) des Rückschlagventils (70) stirnseitig eine Gewindebohrung (78) auf, in welche eine Gewindestange eingeschraubt werden kann.

Die gesamte Demontage der Ventilteile erfolgt bei der Hochdruckausführung wie folgt:
Zunächst wird der Montageplattenverschluß (20) abgenommen. Anschließend wird der Sicherungsring (57) von der Regelspindel (50) entfernt. Es wird dann der Ventilteller (10) von der Regelspindel (50) abgezogen, anschließend wird mit Hilfe eines handelsüblichen Hohlsteckschlüssels die Regelbuchse (14B) mitsamt der Regelspindel (50) aus dem Bypaßstutzen (12) geschraubt und durch den Montageplattenverschluß (20) entnommen. Anschließend kann die Regelspindel nach hinten aus der Regelbuchse (14B) herausgezogen werden. Gegebenenfalls kann zum Herausziehen der Regelspindel (50) mit der Regelbuchse (14B) und beim Herausziehen der Regelspindel (50) aus der Regelbuchse (14B) eine Gewindestange o.d dgl. zu Hilfe genommen werden, welche in die montageplattenseitige Stirnseite der Regelspindel (50) einschraubbar ist. Zur Entnahme des Rückschlagventils (70) wird dann eine Gewindestange in die kopfseitige Gewindebohrung (78) des Dichtkolbens (72) eingeschraubt und das gesamte Rückschlagventil (70) aus dem Bypaßstutzen (12) hinausgezogen. Schließlich kann das Rückschlagventil (70) nach Entfernen des Federringes (79) aus der Hülse (76) zerlegt werden.

Eine weitere mögliche Option ist der Anbau einer sogenannten Handanfahrleitung über einen Handanfahrstutzen (80).

Dieser Handanfahranschlußstutzen ist direkt in den Montageplattenverschluß (20) integriert und über Durchgangslöcher (81) in der Montageplatte bzw. in einem Flanschabschnitt (82) der Führungsbuchse (25) für den Rückschlagventilteller (10) mit dem Innenraum des Ventilgehäuses (2) verbunden.

Um den Durchfluß zu drosseln befinden sich im Handanfahrstutzen (80) mindestens eine, in der Hochdruckversion mehrere, z. B. drei, hintereinanderliegende, gelochte Scheiben, die sogenannten Drosselscheiben (83).

Eine solche Handanfahrleitung wird bei bestimmten Installationen zur Inbetriebnahme verwendet, um beim Anfahren die Bypaßseite zu schonen. Hierzu wird bei einem geschlossenen, dem Speisewasseranschlußstutzen (5) folgenden Ventil in der Hauptdurchgangsrichtung (3) ein in der Handanfahrleitung befindliches Ventil geöffnet (diese Ventile sind in den Figuren nicht dargestellt). Das Medium fließt dann beim Anfahren der Pumpe zunächst durch das Hauptventil am Ventilteller (10) vorbei und die Handanfahrleitung zum Zulaufbehälter zurück. Der Bypaß bleibt während des Anfahrens geschlossen. Erst nach einiger Zeit wird das Handanfahrventil geschlossen und das Hauptdurchgangsventil geöffnet, so daß dann das Bypaßventil auch in Betrieb ist.

Das Ventilgehäuse (2, 2D) ist vorzugsweise als Gußgehäuse (2) ausgeführt. Dies verringert den Herstellungspreis, reduziert den Materialeinsatz und ist daher ressourcenschonender. Bei der Verwendung von nichtgießbaren Sonderwerkstoffen, zum Beispiel für einen Einsatz der Pumpenschutzventile (1) in Bereiche in denen Seewasser- oder Chemiebeständigkeit oder eine besondere Temperaturbeständigkeit verlangt wird, kann das Gehäuse (2D) auch aus Vollmaterial, zum Beispiel speziellen VA-Materialien, Kupfer oder anderem gedreht werden.

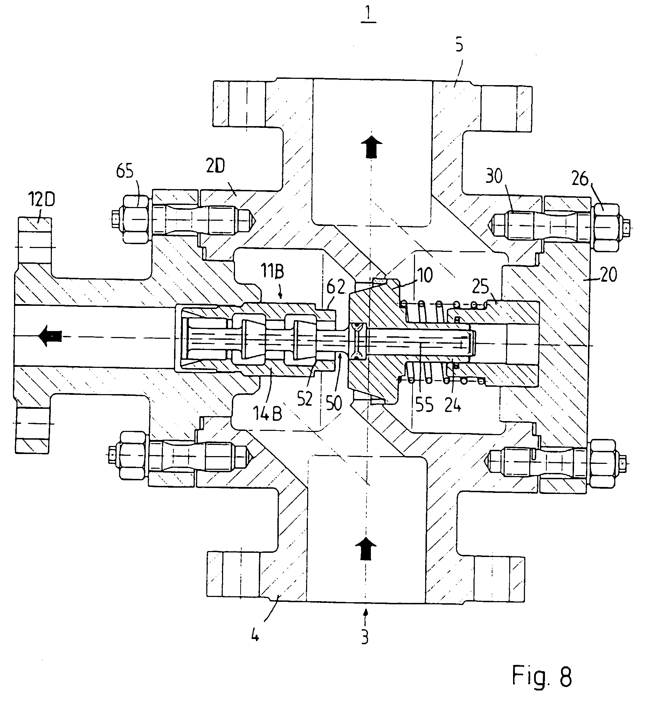

Ein entsprechendes Ausführungsbeispiel zeigt Fig. 8. Der Aufbau innerhalb des gedrehten Gehäuses (2D) und eines Gußgehäuses (2) ist, bis auf einige fertigungstechnische Änderungen, im wesentlichen gleich.

Der Bypaßstutzen (12) ist in der Gußgehäuseversion entweder in einen Querstutzen (13) des Ventilgehäuses (2) eingeschraubt und mit einer Dichtschweißnaht (64) versehen (z. B. Fig. 1) oder nur an den Querstreben (13) angeschweißt (Fig. 2).

In der gedrehten Ausführungsform ist der gesamte Bypaßstutzen (12D) an das Ventilgehäuse (2D) über eine Schraubverbindung (65) angeflanscht und mittels eines Dichtrings abgedichtet (Fig. 8).

## Patentansprüche

1. Pumpenschutzventil (1) mit einem Ventilgehäuse (2, 2D), mit einem in einer Hauptdurchgangsrichtung (3) angeordneten Pumpenanschlußstutzen (4), einem diesen gegenüberliegenden Speisewasseranschlußstutzen (5), einem seitlich zur Hauptdurchgangsrichtung angeordneten Bypaßstutzen (12, 12D) und einem diesem gegenüberliegenden Montageplattenverschluß (20), zwischen denen koaxial zu dem Bypaßstutzen (12, 12D) und dem Montageplattenverschluß (20) ein Rückschlagventilteller (10), ggf. federbelastet, axial verschieblich gelagert ist, der ein zu diesem koaxiales, mindestens einstufiges Drosselventil (11, 11A, 11B) betätigt, so daß dieses bei geschlossenem Rückschlagventilteller (10) voll geöffnet ist und von der Pumpenanschlußseite einen Bypaß zu dem Bypaßstutzen (12, 12D) herstellt, wobei ein Ventilsitz (22) des Ventilgehäuses (2, 2D) für den Rückschlagventilteller (10) dem Montageplattenverschluß (20) gegenüberliegt, dadurch gekennzeichnet, daß der Rückschlagventilteller (10) und das Drosselventil (11, 11A, 11B) durch den Montageplattenverschluß (20) aus dem Ventilgehäuse (2, 2D) herausnehmbar gelagert sind.

2. Pumpenschutzventil nach Anspruch 1, dadurch gekennzeichnet, daß das Drosselventil (11, 11A) aus einer am Rückschlagventilteller (10) angeordneten verschieblich in oder über einer im Ventilgehäuse (2) angeordneten, den Zufluß zum Bypaßstutzen (12) bildenden Regelbuchse (14, 14A) geführten Hülse (18) oder Ventilkegel (28) besteht, wobei die aneinander geführten äußeren oder inneren Mantelflächen der Regelbuchse (14, 14A) der Hülse (18) und/oder des Schiebers (28) so ausgebildet sind, daß diese in mindestens einer relativen Position zueinander den Zugang zum Bypaßstutzen (12, 12D) verschließen und in mindestens einer relativen Position zueinander den Zufluß zum Bypaßstutzen (12, 12D) öffnen und die Hülse (18) und/oder der Schieber (28) gemeinsam mit dem Rückschlagventilteller (10) durch den Montageplattenverschluß (20) koaxial zu diesem aus dem Ventilgehäuse (2) herausziehbar ist.

3. Pumpenschutzventil nach einem der Ansprüche 1 oder 2, dadurch gekennzeichnet, daß das Drosselventil (11) ein Lochkorbdrosselventil mit einem vollflächig über der Regelbuchse (14) geführten Regelhülse (18) ist, wobei Regelbuchse (14) und Regelhülse (18) jeweils einen ringförmigen Abschnitt mit radialen Durchgangslöchern (16, 17) aufweisen.

4. Pumpenschutzventil nach Anspruch 3, dadurch gekennzeichnet, daß die Regelbuchse (14) ventilkolbenseitig mit einer Stirnwand (15) verschlossen ist und zwischen dieser und einem Ventilboden des Rückschlagventiltellers (10) oder einer ventiltellerseitigen Stirnwand der Hülse (18) durch mindestens eine Entlastungsbohrung (27) in der Hülse (18) des Lochkorbdrosselventils (11) druckentlastet ist.

5. Pumpenschutzventil nach einem der Ansprüche 1 oder 2, dadurch gekennzeichnet, daß das Drosselventil (11A) ein ein- oder mehrstufiges Kegelventil ist, mit mindestens einem Ventilkegel (28), der an einer Regelspindel (29) mit Stegen (30) an dem Rückschlagventilteller (10) koaxial angeordnet ist, wobei der Ventilkegel (28) bei geschlossenem Bypaßventil in Gleitpassung in einem dazu passenden Abschnitt (31) der Regelbuchse (14A) verschieblich vollflächig geführt ist und im geöffneten Zustand nur mit den Stegen (30) an deren Innenseite (32) dort geführt ist.

6. Pumpenschutzventil nach einem oder mehreren der vorstehenden Ansprüche, dadurch gekennzeichnet, daß das Drosselventil (11B) ein ein- oder mehrstufiges Ventil (36) mit mindestens einem über eine Regelspindel (50) an dem Rückschlagventilteller (10) angeordneten Ventilkegel (51A, 51B) oder Ventilteller (54) ist, welcher bei geschlossenem Drosselventil (11B) gegen mindestens einen in der Regelbuchse (14B) angeordneten, in Richtung Bypaßstutzen (12, 12D) weisenden Ventilsitz (52) drückt und das Drosselventil (11B) dichtend abschließt.

7. Pumpenschutzventil nach einem oder mehreren der vorstehenden Ansprüche, dadurch gekennzeichnet, daß der Rückschlagventilteller (10) und die Regelspindel (29, 50) im Ventilgehäuse (2, 2D) voneinander lösbar verbunden angeordnet sind, und daß die Regelspindel (29, 50) an dem zum Montageplattenverschluß (20) weisenden Ende mit einer Werkzeugaufnahme (59) versehen ist.

8. Pumpenschutzventil nach einem oder mehreren der vorstehenden Ansprüche, dadurch gekennzeichnet, daß die Regelbuchse (14, 14A, 14B) lösbar am Bypaßstutzen (12, 12D) angeordnet ist.

9. Pumpenschutzventil nach Anspruch 8, dadurch gekennzeichnet, daß die Regelbuchse (14, 14A, 14B) im Bypaßstutzen (12, 12D) einschraubbar ist und eine Dichtfläche (60) aufweist, welche im eingeschraubten Zustand gegen einen im Bypaßstutzen (12, 12D) angeordneten Dichtsitz (61) drückt, und daß die Regelbuchse (14, 14A, 14B) an dem zum Montageplattenverschluß (20) weisenden Ende mit einer Werkzeugaufnahme (62) versehen ist.

10. Pumpenschutzventil nach einem oder mehreren der vorstehenden Ansprüche, dadurch gekennzeichnet, daß der Bypaßstutzen (12, 12D) an das Ventilgehäuse (2, 2D) angeschweißt und/oder eingeschraubt oder angeflanscht ist.

11. Pumpenschutzventil nach einem oder mehreren der vorstehenden Ansprüche, dadurch gekennzeichnet, daß eine montageplattenseitige Gehäusestirnwand Gewindesacklöcher (30) zur Verschraubung der Montageplatte (20) aufweist.

12. Pumpenschutzventil nach einem oder mehreren der vorstehenden Ansprüche, dadurch gekennzeichnet, daß der Rückschlagventilteller (10) einen Führungsstutzen (24) trägt, der in loser Passung in einer Buchse (25) geführt ist, wobei die Buchse (25) an eine Montageplatte des Montageplattenverschlusses (20) angeordnet ist.

13. Pumpenschutzventil nach einem oder mehreren der vorstehenden Ansprüche, dadurch gekennzeichnet, daß der Rückschlagventilteller (10) mit einem Führungsstutzen (24) abgedichtet in einer Buchse (25) geführt ist, die in eine Montageplatte (35) des Montageplattenverschlusses (20) eingesetzt ist und daß eine Druckentlastungsbohrung (33, 55) den Innenraum (34) des Führungsstutzens (24) mit der Bypaßseite verbindet.

14. Pumpenschutzventil nach einem oder mehreren der vorstehenden Ansprüche, dadurch gekennzeichnet, daß im Bypaßstutzen (12, 12D) und/oder in der Regelbuchse (14, 14A, 14B) ein Bypaß-Rückschlagventil (70) durch den Montageplattenverschluß (20) entnehmbar, gegen den Bypaßstutzen (12, 12D) und/oder die Regelbuchse (14, 14A, 14B) abdichtend eingesteckt oder eingeschraubt ist.

15. Pumpenschutzventil nach einem oder mehreren der vorstehenden Ansprüche, dadurch gekennzeichnet, daß außen am Montageplattenverschluß (20) ein weiterer Bypaßstutzen (80) (Handanfahrstutzen) angeordnet ist, welcher über Durchgangslöcher (81) in der Montageplatte (20) und/oder einem Flanschabschnitt (82) der Führungsbuchse (25) für den Rückschlagventilteller (10) mit dem Innenraum des Ventilgehäuses (2, 2D) verbunden ist.

16. Pumpenschutzventil nach Anspruch 15, dadurch gekennzeichnet, daß im Handanfahrstutzen (80) mindestens eine den Durchfluß drosselnde Lochscheibe (83) (Drosselscheibe) angeordnet ist.

## Claims

1. Pump protection valve (1) having a valve case (2, 2D), a pump connection fitting (4) disposed in a principal direction of flow (3), opposite that a feed-water connection fitting (5), a by-pass fitting (12, 12D) disposed to the side of the principal direction of flow, and opposite that a mounting plate closure (20), between which coaxial to the by-pass fitting (12, 12D) and the mounting plate closure (20) a check valve disk (10) is mounted in axially displaceable manner and is springloaded if appropriate, and this check valve disk actuates an at least one-stage restrictor valve (11, 11A, 11B) coaxial thereto, with the result that the restrictor valve is fully open when the check valve disk (10) is shut and from the pump connection side produces a by-pass to the by-pass fitting (12, 12D), and opposite the mounting plate closure (20) is a valve seat (22) belonging to the valve case (2, 2D) for the check valve disk (10),
characterised in that the check valve disk (10) and the restrictor valve (11, 11A, 11B) are mounted so as to be able to be withdrawn from the valve case (2, 2D) through the mounting plate closure (20).

2. Pump protection valve according to claim 1, characterised in that the restrictor valve (11, 11A) consists of a sleeve (18) or valve cone (28) arranged on the check valve disk (10) and adapted to be displaced in or over a control bushing (14, 14A) disposed in the valve case (2) and constituting the inflow to the by-pass fitting (12), the adjacent external or internal cylindrical surfaces of the control bushing (14, 14A) of the sleeve (18) and/or of the slide (28) being so constructed that the latter in at least one position relative to one another seal off the access to the by-pass fitting (12, 12D) and in at least one position relative to one another open up the inflow to the by-pass fitting (12, 12D), and the sleeve (18) and/or the slide (28) is able to be withdrawn jointly with the check valve disk (10) out of the valve case (2) through the mounting plate closure (20) coaxial thereto.

3. Pump protection valve according to either of claims 1 or 2, characterised in that the restrictor valve (11) is a perforated basket-type restrictor valve with a control sleeve (18) whose entire surface passes over the control bushing (14), the control bushing (14) and the control sleeve (18) respectively incorporating an annular portion with radial through-holes (16, 17).

4. Pump protection valve according to claim 3, characterised in that the control bushing (14) is sealed by an end wall (15) on the valve plunger side and between said end wall (15) and a valve floor on the check valve disk (10) or an end wall of the sleeve (18) on the valve disk side it is relieved of pressure by at least one relief bore (27) in the sleeve (18) of the perforated basket-type restrictor valve (11).

5. Pump protection valve according to either of claims 1 or 2, characterised in that the restrictor valve (11A) is a single-stage or multi-stage cone valve, with at least one valve cone (28) which is disposed coaxially on the check valve disk (10) on a regulating spindle (29) with webs (30), the valve cone (28) being adapted to be displaced with its entire surface guided along a matching section (31) of the control bushing (14A) in a sliding fit when the by-pass valve is shut, and when opened only resting with the webs (30) against the inner face (32) thereof.

6. Pump protection valve according to one or more of the preceding claims, characterised in that the restrictor valve (11B) is a single-stage or multi-stage valve (36) with at least one valve cone (51A, 51B) or valve disk (54) which is disposed via a regulating spindle (50) on the check valve disk (10) and which when the restrictor valve (11B) is shut presses against at least one valve seat (52) disposed in the control bushing (14B) and facing towards the by-pass fitting (12, 12D) and shuts off and seals the restrictor valve (11B).

7. Pump protection valve according to one or more of the preceding claims, characterised in that the check valve disk (10) and the regulating spindle (29, 50) are disposed in the valve case (2, 2D) so as to be releasable from one another, and that the regulating spindle (29, 50) is provided with a tool locator (59) at the end facing Lowards the mounting plate closure (30).

8. Pump protection valve according to one or more of the preceding claims, characterised in that the control bushing (14, 14A, 14B) is releasably disposed on the by-pass fitting (12, 12D).

9. Pump protection valve according to claim 8, characterised in that the control bushing (14, 14A, 14B) is adapted to be screwed into the by-pass fitting (12, 12D) and incorporates a sealing surface (60) which in the screwed-down state presses against a sealing seat (61) disposed in the by-pass fitting (12, 12D), and that the control bushing (14, 14A, 14B) is provided with a tool locator (62) at the end facing towards the mounting plate closure (20).

10. Pump protection valve according to one or more of the preceding claims, characterised in that the by-pass fitting (12, 12D) is welded and/or bolted or flanged to the valve case (2, 2D).

11. Pump protection valve according to one or more of the preceding claims, characterised in that an end wall of the case on the mounting plate side incorporates threaded blind holes (30) for screwing on the mounting plate (20).

12. Pump protection valve according to one or more of the preceding claims, characterised in that the check valve disk (10) carries a guide fitting (24) which is guided in a loose fit in a bushing (25), the bushing (25) being disposed on a mounting plate forming part of the mounting plate closure (20).

13. Pump protection valve according to one or more of the preceding claims, characterised in that the check valve disk (10) is guided with a guide fitting (24) in a sealed manner in a bushing (25) which is inserted into a mounting plate (35) forming part of the mounting plate closure (20) and that a pressure relief bore (33, 35) connects the inner compartment (34) of the guide fitting (24) to the by-pass side.

14. Pump protection valve according to one or more of the preceding claims, characterised in that a by-pass check valve (70) adapted to be removed through the mounting plate closure (20) is sealingly inserted or screwed in the by-pass fitting (12, 12D) and/or in the control bushing (14, 14A, 14B), against the by-pass fitting (12, 12D) and/or the control bushing (14, 14A, 14B).

15. Pump protection valve according to one or more of the preceding claims, characterised in that on the outside of the mounting plate closure (20) is a further by-pass fitting (80) (manual start-up fitting) which is connected to the interior of the valve case (2, 2D) via through-holes (81) in the mounting plate (20) and/or a flange section (82) of the guide bushing (25) for the check valve disk (10).

16. Pump protection valve according to claim 15, characterised in that in the manual start-up fitting (80) there is at least one perforated disk (83) (restrictor disk) which restricts the throughflow.

## Revendications

1. Soupape de protection de pompe (1) avec un boîtier (2, 20) comprenant une tubulure de raccordement (4) de pompe disposée dans un sens de passage principal (3), une tubulure de branchement d'alimentation en eau (5) disposée du côté opposé, une tubulure à bypass (12, 12D) disposée transversalement par rapport au sens de passage principal (3) et une fermeture plaque de montage (20) disposée du côLé opposé à cette tubulure, une tête de clapet de retenue (10), éventuellement tarée, disposée, coaxialemen, entre la tubulure à bypass (12, 12D) et la fermeture plaque de montage (20), étant montée, déplaçable axialement et actionnant une vanne d'étranglement (11, 11A, 11B) au moins mono-étagée, coaxialement par rapport à celle-ci, de sorte que cette vanne d'étranglement soit complètement ouverte quand la tête (10) du clapet de retenue est fermée et forme, du côté du raccordement de la pompe, une dérivation à destination de la tubulure à bypass (12, 12D), un siège (22) du boîtier (2, 2D) pour la tête (10) du clapet de retenue étant situé vis-à-vis de la fermeture plaque de montage (20), caractérisée en ce que la tête (10) du clapet de retenue et la vanne d'étranglement (11, 11A, 11B) sont montées, séparables du boîtier (2, 2D) de la soupape de protection, de sorte à pouvoir être enlevées en passant par la fermeture plaque de montage (20).

2. Soupape de protection de pompe selon la revendication 1,
caractérisée en ce que
le clapet de retenue (11, 11A) consiste en une douille (18) ou un cône de soupape (28) équipant la tête (10) du clapet de retenue, déplaçable dans ou sur une boîte de réglage (14, 14A) formant l'entrée à destination de la tubulure à bypass (12), les surfaces extérieures ou intérieures de la gaine de la boîte de réglage (14, 14A), de la douille (18) et/ou du coulisseau (28) étant conçues de sorte à fermer, au moins dans une position relative par rapport les unes aux autres, l'entrée de la tubulure à bypass (12, 12D) et à l'ouvrir, au moins dans une position relative par rapport les unes aux autres,
et quc la douille (18) et/ou le coulisseau (28) peuvent être retirés hors du boîtier (2) de la soupape, en commun avec la tête (10) du clapet de retenue, par la fermeture plaque de montage (20), coaxialement par rapport à celle-ci.

3. Soupape de protection de pompe selon la revendication 1 ou 2,
caractérisée en ce que
la vanne d'étranglement (11) est une vanne d'étranglement perforée en panier comprenant une douille de réglage (18) conduite sur toute la surface sur la boîte de réglage (14), la boîte de réglage (14) et la douille de réglage (18) présentant chacune un secteur annulaire pourvu de perforations de passage radiales (16, 17),

4. Soupape de protection de pompe selon la revendication 3,
caractérisée en ce que
la boîte de réglage (14) est fermée, du côté piston, par une paroi frontale (15) et est déchargée, entre celle-ci et un fond de la tête (10) du clapet de retenue ou une paroi frontale de la douille (18), côté tête de clapet, par au moins un trou de détente (27) pratiqué dans la douille (18) de la vanne d'étranglement perforée en panier (11).

5. Soupape de protection de pompe selon la revendication 1 ou 2,
caractérisée en ce que
la vanne d'étranglement (11A) est une vanne à cône mono- ou polyétagée comprenant au moins un cône (28) qui est relié coaxialement à une tête de vanne de retenue (10) par une tige de réglage (29) avec des barrettes (30), le cône (28) étant guidé, déplaçable sur toute la surface, dans un secteur correspondant (31) de la boîte de réglage (14A), la soupape à bypass étant fermée, en ajustement de glissage, tandis qu'il est guidé seulement par les barrettes (30) sur son côté latéral (32), à l'état ouvert.

6. Soupape de protection de pompe selon l'une ou plusieurs des revendications précédentes,
caractérisée en ce que
la vanne d'étranglement (11B) est une vanne mono- ou polyétagée avec au moins un cône (51A, 51B) ou tête de clapet (54) équipant la tête (10) du clapet de retenue par l'intermédiaire d'une tige de réglage (50), ce cône ou cette tête se pressant contre au moins un siège (52) disposé dans la boîte de réglage (14B) et dirigé vers la tubulure à bypass (12, 12D), fermant ainsi de façon étanche la vanne d'étranglement (11B).

7. Soupape de protection de pompe selon l'une ou plusieurs des revendications précédentes,
caractérisée en ce que
la tête (10) du clapet de retenue et la tige de réglage (29, 50) sont disposées dans le boîtier (2, 2D) étant reliées ensemble, amoviblement, et que la tige de réglage (29, 50) est pourvue d'un raccordement d'outil (59) à l'extrémité dirigée ver la fermeture plaque de montage (20).

8. Soupape de protection de pompe selon l'une ou plusieurs des revendications précédentes,
caractérisée en ce que
les boîtes de réglage (14, 14A, 14B) sont disposées, étant amovibles, dans la tubulure à bypass (12, 12D).

9. Soupape de protection de pompe selon la revendication 8,
caractérisée en ce que
la boîte de réglage (14, 14A, 14B) peut être vissée dans la tubulure à bypass (12, 12D)et présente une surface d'étanchéité (60) qui, à l'état vissé, s'appuie contre un siège d'étanchéité (61) disposé dans la tubulure à bypass (12, 12D) et que la boîte de réglage (14, 14A, 14B) est pourvue d'un raccordement d'outil (62) à l'extrémité dirigée vers la fermeture plaque de montage (20).

10. Soupape de protection de pompe selon l'une ou plusieurs des revendications précédentes,
caractérisée en ce que
la tubulure à bypass (12, 12D) est soudée et/ou vissée ou bridée au boîtier (2, 2D) de la soupape.

11. Soupape de protection de pompe selon l'une ou plusieurs des revendications précédentes,
caractérisée en ce que
une paroi frontale du boîtier, côté plaque de montage, présente des trous borgnes filetés (30) pour la fixation de la plaque de montage (20) à l'aide de vis.

12. Soupape de protection de pompe selon l'une ou plusieurs des revendications précédentes,
caractérisée en ce que
la tête (10) du clapet de retenue porte une tubulure de guidage (24) qui est conduite en ajustage lâche dans une boîte (25), cette boîte (25) étant disposée contre une plaque de montage de la fermeture plaque de montage (20).

13. Soupape de protection de pompe selon l'une ou plusieurs des revendications précédentes,
caractérisée en ce que
la tête (10) du clapet de retenue est conduit, étanché, dans une boîte (25), avec une tubulure de guidage (24), la boîte (25) étant placé dans une plaque de montage (35) de la fermeture plaque de montage (20)
et qu'un forage de détente (33, 55) relie l'espace intérieur (34) de la tubulure de guidage (24) avec le côté bypass.

14. Soupape de protection de pompe selon l'une ou plusieurs des revendications précédentes,
caractérisée en ce que
un clapet de retenue à bypass (70), retirable par la fermeture plaque de montage (20), est enfiché ou vissé, de façon étanche, dans la tubulure à bypass (12, 12D) et/ou dans la boîte de réglage (14, 14A, 14B), contre laquelle il porte.

15. soupape de protection de pompe selon l'une ou plusieurs des revendications précédentes,
caractérisée en ce que
une autre tubulure à bypass (80) (tubulure de démarrage manuel) est disposée à l'extérieur, sur la fermeture de plaque de montage (20) et est reliée à l'espace intérieur du boîtier (2, 2D) de la soupape, par l'intermédiaire de trous de passage (81) pratiqués dans la plaque de montage (20) et/ou un secteur de bride (82) de la boîte de guidage (25) de la tête (10) du clapet de retenue .

16. Soupape de protection de pompe selon la revendication 15,
caractérisée en ce que
un disque perforé (83) (débitmètre), au moins, est disposé dans la tubulure de démarrage manuel (80) pour étrangler le flux.
